# FASCICULE DE BREVET EUROPEEN

(11) **EP 0 943 508 B1**
(45) Date de publication et mention de la délivrance du brevet: **14.08.2002**
(21) Numéro de dépôt: 99400449.7
(22) Date de dépôt: 24.02.1999
(51) Int. Cl.: B60R 25/00

(54) **Dispositif antivol pour véhicule automobile conjugué avec la clé de contact de démarrage du moteur du véhicule**
Fahrzeugdiebstahlsicherung mit zusammenarbeitendem Zündschloss
Vehicle antitheft device combined with the engine ignition key of the vehicle

(30) Priorité: 03.03.1998 FR 9802553
(43) Date de publication de la demande: 22.09.1999
(73) Titulaire: AUTOMOBILES PEUGEOT, 75116 Paris (FR); AUTOMOBILES CITROEN, 92200 Neuilly-sur-Seine (FR)
(72) Inventeur: Burguburu, Philippe, 78000 Versailles (FR)
(74) Mandataire: Thinat, Michel

(56) Documents cités:
- EP-A- 0 640 517
- EP-A- 0 742 127
- PATENT ABSTRACTS OF JAPAN vol. 015, no. 053 (M-1079), 7 février 1991 (1991-02-07) & JP 02 286449 A (YUHSHIN CO LTD), 26 novembre 1990 (1990-11-26)

## Description

La présente invention concerne un dispositif antivol pour véhicule automobile conjugué avec la clé de contact de démarrage du moteur du véhicule.

De tels dispositifs sont décrits dans les brevets JP 02 286449 A, EP 0 640 517A et EP 0 742 127 A. JP 02 28 6449 A sert de base à la présentation en deux parties la revendication 1.

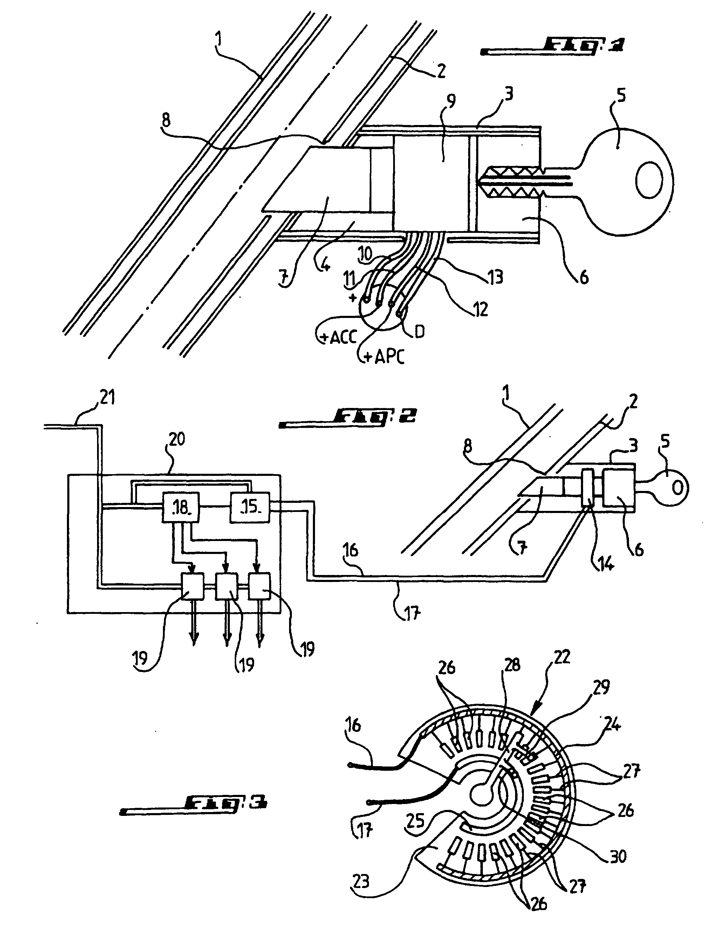

La figure 1 représente un dispositif antivol connu permettant de condamner la rotation du tube de direction portant le volant lorsque la clé de contact est retirée de sa serrure.

Comme représenté à cette figure, la référence 1 désigne la colonne de direction du véhicule dans laquelle est monté à rotation le tube de direction 2 portant le volant de direction (non représenté). Une portion de tube cylindrique 3 est fixée, par exemple par soudage, à la colonne de direction 1 et sert de logement au boîtier 4 de l'antivol conçu de façon à réaliser principalement deux fonctions, respectivement de blocage de la direction lorsque la clé de contact 5 est retirée d'un bloc 6 de réception de la clé 5 logé dans le boîtier 4 et de mise sous tension de différents circuits ou appareils électriques suivant la position angulaire de la clé de contact 5 dans le bloc 6. A cet effet, le bloc de réception 6 est agencé de façon à déplacer axialement un pêne 7, lorsque la clé 5 est retirée, dans une lumière 8 du tube 2 portant le volant de direction pour immobiliser celui-ci en rotation et à commander un bloc de commutation électrique 9 assurant la distribution d'énergie électrique aux différents circuits ou appareils électriques à commander suivant la position angulaire de la clé 5. Le bloc de commutation 9 est relié aux différents circuits électriques à commander par des fils électriquement conducteurs 10-13, dans le cas présent au nombre de quatre, constituant respectivement un fil conducteur d'entrée relié en permanence au pôle positif de la batterie du véhicule, un fil de sortie pouvant être traversé par un courant d'alimentation ou de commande d'appareils électriques accessoires du véhicule, tels que par exemple un récepteur radio et un témoin de charge de la batterie, lorsque la clé 5 est à une position +ACC, un fil de sortie traversé par un courant de commande d'autres appareils électriques, tels qu'une bobine d'allumage et un calculateur d'injection de carburant pour le fonctionnement du moteur du véhicule, lorsque la clé 5 est à la position +APC et un fil de sortie traversé par un courant de commande du démarreur électrique du moteur lorsque la clé 5 est à la position D.

Ce dispositif connu présente plusieurs inconvénients.

Tout d'abord, les circuits ou appareils électriques commandés par le dispositif antivol étant parcourus par des courants relativement importants, il est nécessaire de prévoir des fils 10-13 sortant de celui-ci ayant une forte section. De plus, comme dans la plupart des véhicules actuels, la colonne de direction 1 est réglable en hauteur et en inclinaison, les fils 10-13 doivent être montés en boucle dynamique, c'est-à-dire qu'ils doivent former une boucle se déformant avec les mouvements de la colonne de direction 1. Il en résulte alors des risques d'usure prématurée et de court-circuit par pincement de ces fils.

Un autre inconvénient vient de ce qu'on utilise actuellement de plus en plus des dispositifs intégrés à la clé de contact et permettant de condamner à distance les portes du véhicule. Ces dispositifs conduisent à des clés beaucoup plus encombrantes, pouvant présenter des formes proéminentes en extrémité et qui peuvent être contactées par le genou du conducteur : il y a ainsi un risque de rotation accidentelle de la clé de contact 5 et donc de coupure du contact lorsque le véhicule roule.

La présente invention a pour but de remédier aux inconvénients ci-dessus en proposant un dispositif antivol dans lequel le contact électrique n'est pas interrompu brusquement, même en cas de rotation accidentelle de la clé, et qui ne nécessite pas des faisceaux de fils encombrants.

A cet effet, le dispositif antivol de l'invention pour véhicule automobile conjugué avec la clé de contact de démarrage du moteur du véhicule pouvant occuper, relativement à un boîtier de l'antivol fixé à la colonne de direction, plusieurs positions angulaires auxquelles différents circuits ou appareils électriques peuvent être commandés, comprenant un capteur logé dans le boîtier de l'antivol qui permet de fournir des signaux codés d'information chacun relatif à une position angulaire déterminée de la clé de contact, un module décodeur relié au capteur par une liaison bifilaire et apte à décoder chaque signal codé d'information de la position angulaire de la clé déterminée par le capteur, un module de commande relié au module décodeur pour assurer la commande des circuits ou appareils électriques appropriés par l'intermédiaire de modules de puissance suivant l'information de la position de la clé de contact fournie par le module décodeur, caractérisé en ce que le module de commande est agencé pour fournir des signaux de commande de mise en service ou hors service des différents circuits ou appareils électriques, aux différentes positions de la clé de contact, en fonction de lois d'hystérésis mémorisées de préférence dans le module de commande et telles que l'hystérésis est moins importante dans le sens de rotation de la clé de contact pour mettre en service les différents circuits ou appareils électriques que dans le sens de rotation opposé de cette clé pour mettre hors service ceux-ci.

Les modules décodeur, de commande et de puissance sont intégrés au calculateur de bord du véhicule.

De préférence, le capteur de position angulaire de la clé de contact comprend une résistance variable en fonction de la position angulaire de la clé de manière à fournir au module décodeur des valeurs différentes de résistance correspondant respectivement aux différentes positions angulaires de la clé.

Avantageusement, la résistance variable comprend un support en matériau électriquement isolant, une piste arquée résistive réalisée sur le support, une piste arquée conductrice réalisée sur le support et séparée concentriquement de la piste résistive, un certain nombre de lamelles conductrices distinctes radiales disposées en arc de cercle sur le support entre les deux pistes résistive et conductrice et reliées électriquement à la piste résistive, et un bras rotatif lié cinématiquement à la rotation de la clé de contact et portant deux balais en contact par frottement respectivement sur la piste conductrice et chacune des lamelles conductrices lors de la rotation de la clé pour réaliser un pont conducteur entre une lamelle contactée par le balai correspondant et la piste conductrice reliée électriquement à un fil conducteur de la liaison bifilaire dont l'autre fil conducteur est relié électriquement à une extrémité de la piste résistive.

La clé de contact est maintenue positivement à chacune de ses positions de contact (+ACC, +APC) par une bille poussée par un ressort et s'engageant successivement, lors de la rotation de la clé de contact, dans des cavités prévues sur une came solidaire de la clé en rotation.

L'invention sera mieux comprise et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :

La figure 1 représente un dispositif antivol pour véhicule automobile selon l'art antérieur.

La figure 2 représente un dispositif antivol pour véhicule automobile conforme à l'invention.

La figure 3 représente en vue agrandie le moyen de codage des différentes positions angulaires de la clé de contact.

Les parties du dispositif antivol de la figure 2 identiques à celles du dispositif antivol de la figure 1 portent les mêmes références et ne seront pas à nouveau décrites.

Le dispositif antivol de l'invention tel que représenté tout d'abord en figure 2 comprend un capteur 14 de détection de la position angulaire de la clé de contact 5 dans le bloc de réception 6, logé dans le boîtier de l'antivol et permettant de fournir des signaux codés de sortie représentatifs respectivement de différentes positions angulaires de la clé 5.

Le capteur 14 est relié à un module décodeur 15 par l'intermédiaire de deux fils électriquement conducteurs 16, 17, le module décodeur 15 étant apte à décoder chaque signal codé d'information provenant du capteur 14 et représentatif d'une position angulaire déterminée de la clé de contact 5.

Le module décodeur 15 a sa sortie reliée à un module de commande 18 assurant la commande des circuits ou appareils électriques appropriés (non représentés), par l'intermédiaire de modules de puissance 19, pour mettre en service ou mettre hors service ces circuits ou appareils électriques suivant l'information de la position angulaire de la clé 5 fournie par le module décodeur 15 au module de commande 18.

Le module de commande 18 est agencé pour fournir les signaux de commande de mise en service ou hors service des différents circuits ou appareils électriques, aux différentes positions de la clé de contact 5, en fonction de lois d'hystérésis mémorisées dans une mémoire (non représentée), de préférence située dans le module de commande 18, ces lois étant telles, comme on le comprendra mieux ultérieurement, que l'hystérésis est plus importante dans le sens de rotation de la clé de contact 5 pour mettre hors service les différents circuits ou appareils électriques que dans le sens de rotation opposé de la clé 5 pour mettre en service ces circuits ou appareils électriques.

Le module décodeur 15, le module de commande 18 et les modules de puissance 19 sont intégrés au calculateur de bord 20 du véhicule et sont alimentés par la batterie du véhicule par une liaison bifilaire 21. Chaque module de puissance 19 peut, à titre d'exemple, être réalisé par un élément semi-conducteur de puissance, tel qu'un transistor fonctionnant en mode de commutation.

Comme cela ressort plus clairement de la figure 3, le capteur de détermination de la position angulaire de la clé de contact 5 est une résistance 22 variable en fonction de la position angulaire de cette clé. Plus précisément, la résistance variable 22 comprend un support 23 en matériau isolant, tel que de la céramique, approximativement en forme de croissant, une piste arquée résistive externe 24 réalisée sur le support 23 au voisinage de son bord périphérique extérieur, une piste arquée conductrice interne 25 réalisée sur le support 23 au voisinage du bord périphérique interne de celui-ci et de façon concentrique à la piste 24, un certain nombre de lamelles conductrices radiales 26 disposées en arc de cercle sur le support 23 entre les deux pistes 24 et 25, les lamelles conductrices 26 étant de plus reliées électriquement à la piste résistive 24 par des fils minces conducteurs radiaux 27, et un bras radial rotatif 28 porté à une extrémité d'un arbre traversant le support 23 dans une direction sensiblement perpendiculaire au plan de celui-ci et relié cinématiquement à la rotation de la clé de contact 5 de façon que le bras 28 puisse suivre les mouvements de rotation de celle-ci. Le bras rotatif 28 porte deux balais conducteurs espacés 29, 30 venant en contact par frottement respectivement sur les lamelles conductrices 26 et la piste conductrice 25 de façon à réaliser un pont conducteur de court-circuit entre la lamelle conductrice 26 sur laquelle est en contact le balai frotteur 29 et la piste conductrice 25 sur laquelle est en contact permanent l'autre balai frotteur 30. L'un 16 des fils de la liaison bifilaire reliant le capteur 14 au module décodeur 15 est relié à une extrémité de la piste résistive 24 tandis que l'autre fil conducteur 17 est relié à la piste conductrice 25, par exemple à une extrémité de celle-ci. Ainsi, une résistance d'une valeur déterminée suivant la position du balai frotteur 29 sur l'une des lamelles conductrices 26 est branchée entre les fils conducteurs 16 et 17.

Comme cela est connu en soi, la clé de contact 5 est maintenue positivement à chacune de ses positions de contact +ACC, +APC par des moyens (non représentés) constitués par une bille poussée par un ressort et s'engageant successivement, lors de la rotation de la clé 5, dans des cavités prévues sur une came solidaire de la clé 5.

Le fonctionnement du dispositif antivol de l'invention ressort déjà en partie de la description qui en a été faite ci-dessus et va être maintenant davantage expliqué.

Lorsque la clé de contact 5 est tournée, la came interne de la clé 5 génère un couple variable suivant les positions correspondant aux positions principales +ACC, +APC, D de la clé 5 et le capteur 14 fournit au module décodeur 15 une valeur de résistance dépendant de la position angulaire de la clé 5. L'information correspondant à cette valeur de résistance est déterminée par le module décodeur 15 pour connaître la position angulaire de la clé 5, et fournie au module de commande 18 qui détermine, en fonction des lois d'hystéréris contenues dans sa mémoire, le type de signal de commande, mise en service ou arrêt, qu'il doit donner aux circuits ou appareils électriques concernés, à chaque position donnée de la clé 5. Par exemple, lorsque l'utilisateur souhaite alimenter des appareils électriques accessoires du véhicule, tels que par exemple un récepteur radio, il tourne la clé de contact 5 vers la position +ACC et l'alimentation de ces appareils accessoires s'effectue à quelques degrés avant d'atteindre la position mécanique stable +ACC de la clé 5, c'est-à-dire par exemple une ou deux lamelles conductrices 26 avant celle correspondant à la position stable, mais l'alimentation de ces appareils accessoires n'est coupée que pour un angle supérieur après cette position stable lorsque la clé 5 est tournée dans le sens opposé, c'est-à-dire plusieurs lamelles conductrices 26 après celles contactées par le frotteur 29 où avait lieu l'alimentation des appareils. Ainsi, lorsque la clé de contact 5 se trouve à une position stable, par exemple +ACC, d'alimentation d'appareils électriques correspondants, une rotation accidentelle de celle-ci de quelques degrés de part et d'autre de sa position stable ne produit aucun effet et il est nécessaire que la clé 5 soit déplacée accidentellement sur une grande amplitude pour qu'une coupure des circuits ou des appareils électriques concernés se produise.

Les avantages du dispositif de l'invention ci-dessus décrits sont les suivants :
- puisque la commande des différents circuits ou appareils électriques ne s'établit plus au niveau de l'antivol lui-même, mais dans le calculateur embarqué du véhicule, il n'y a plus que deux fils conducteurs minces, c'est-à-dire de très faible section, sortant de l'antivol, ce qui élimine les inconvénients mentionnés ci-dessus rencontrés avec les faisceaux de fils conducteurs de l'art antérieur ;
- l'alimentation ou la commande du ou des circuits ou appareils électriques étant établie ou coupée par reconnaissance de la position angulaire de la clé de contact, de préférence avec une hystérésis, une rotation accidentelle, même relativement importante, de la clé n'entraîne pas d'inconvénient majeur comme par exemple l'arrêt inopiné du moteur du véhicule, alors que dans les dispositifs de l'art antérieur où l'établissement du contact d'alimentation des circuits ou des appareils électriques est mécanique, le moteur peut être coupé brusquement dès que la clé quitte une position donnée.

## Revendications

1. Dispositif antivol pour véhicule automobile conjugué avec la clé de contact de démarrage (5) du moteur du véhicule pouvant occuper, relativement à un boîtier d'un antivol fixé à la colonne de direction (1) du véhicule, plusieurs positions angulaires (+ACC, +APC, D) auxquelles différents circuits ou appareils électriques peuvent être commandés, comprenant un capteur (14) logé dans le boîtier de l'antivol qui permet de fournir des signaux codés d'information chacun relatif à une position angulaire déterminée de la clé de contact (5), un module décodeur (15) relié au capteur (14) par une liaison bifilaire (16, 17) et apte à décoder chaque signal codé d'information de la position angulaire de la clé (5), un module de commande (18) relié au module décodeur (15) pour assurer la commande des circuits ou appareils électriques appropriés par l'intermédiaire de modules de puissance (19) suivant l'information de la position angulaire de la clé (5) fournie par le module décodeur (15), **caractérisé en ce que** le module de commande (18) est agencé pour fournir des signaux de commande de mise en service ou hors service des différents circuits ou appareils électriques, aux différentes positions de la clé de contact (5), en fonction de lois d'hystérésis mémorisées de préférence dans le module de commande (18) et telles que l'hystérésis est moins importante dans le sens de rotation de la clé de contact (5) pour mettre en service les différents circuits ou appareils électriques que dans le sens de rotation opposé de la clé (5) pour mettre hors service ceux-ci.

2. Dispositif selon la revendication 1, **caractérisé en ce que** les modules décodeur (15), de commande (18) et de puissance (19) sont intégrés au calculateur de bord (20) du véhicule.

3. Dispositif selon la revendication 1 ou 2, **caractérisé en ce que** le capteur de position angulaire (14) de la clé de contact (5) comprend une résistance (22) variable en fonction de la position angulaire de la clé (5) de manière à fournir au module décodeur (15) des valeurs différentes de résistance correspondant respectivement aux différentes positions angulaires de la clé (5).

4. Dispositif selon la revendication 3, **caractérisé en ce que** la résistance variable (22) comprend un support (23) en matériau électriquement isolant, une piste arquée résistive (24) réalisée sur le support (23), une piste arquée conductrice (25) réalisée sur le support (23) et séparée concentriquement de la piste résistive (24), un certain nombre de lamelles conductrices distinctes radiales (26) disposées en arc de cercle sur le support (23) entre les deux pistes résistive (24) et conductrice (25) et reliées électriquement à la piste résistive (24), et un bras rotatif (28) lié cinématiquement à la rotation de la clé de contact (5) et portant deux balais (30, 29) en contact par frottement respectivement sur la piste conductrice (25) et chacune des lamelles conductrices (26) lors de la rotation de la clé (5) pour réaliser un pont conducteur entre une lamelle (26) contactée par le balai correspondant (29) et la piste conductrice (25) reliée électriquement à un fil conducteur (17) de la liaison bifilaire précitée dont l'autre fil conducteur (16) est relié électriquement à une extrémité de la piste résistive (24).

5. Dispositif selon l'une des revendications précédentes, **caractérisé en ce que** la clé de contact (5) est maintenue positivement à chacune de ses positions de contact (+ACC, +APC) par une bille poussée par un ressort et s'engageant successivement, lors de la rotation de la clé, dans des cavités prévues sur une came solidaire de la clé en rotation.

## Claims

1. Vehicle antitheft device connected with the engine ignition key (5) of the vehicle able to occupy, in relation to a box with an ignition lock fixed on the steering column (1) of the vehicle, several angular positions (+ACC, +APC, D) to which various electric circuits or devices can be controlled, said antitheft device including a sensor (14) housed in the ignition lock box making it possible to provide coded information signals each relating to a specific angular position of the ignition key (5), a decoder module (15) connected to the sensor (14) by a bifilar connection (16, 17) and able to decode each coded information signal of the angular position of the key (5), a control module (18) connected to the decoder module (15) to ensure control of the appropriate electric devices or circuits by means of power modules (19) according to the information of the angular position of the key (5) provided by the decoder module (15), **characterised in that** the control module (18) is fitted so as to provide control signals for activating or de-activating the various electric devices or circuits at different positions of the ignition key (5) according to hysteresis laws preferably stored in the control module (18) and being such that the hysteresis is less significant in the direction of rotation of the ignition key (5) so as to activate the various electric devices of circuits in the opposite direction of rotation of the key (5) so as to de-activate the latter.

2. Device according to claim 1, **characterised in that** the decoder (15), control (18) and power (19) modules are integrated in the panel calculator (20) of the vehicle.

3. Device according to claim 1 or 2, **characterised in that** the angular position sensor (14) of the ignition key (5) includes a resistor (22) which varies depending on the angular position of the key (5) so as to provide the decoder module (15) with different resistance values respectively corresponding to the various angular positions of the key (5).

4. Device according to claim 3, **characterised in that** the variable resistor (22) includes a support (23) made of an electrically insulating material, an arc-shaped resistive track (24) embodied on the support (23), an arc-shaped conductive track (25) embodied on the support (23) and concentrically separated from the resistive track (24), a certain number of distinct radial conductive strips (26) positioned in the shape of an arc of a circle on the support (23) between the two resistive (24) and conductive (25) tracks and electrically connected to the resistive track (24), and rotary arm (28) linked kinematically to rotation of the ignition key (5) and bearing two contact brushes (30, 29) via rubbing respectively on the conductive track (25) and each of the conductive strips (26), during rotation of the key (5) so as to embody a conductive bridge between one strip (26) contacted by the corresponding brush (29) and the conductive track (25) electrically connected to one conductive wire (17) of said bifilar link including the other conductive wire (16), is electrically connected to one extremity of the resistive track (24).

5. Device according to one of the preceding claims, **characterised in that** the ignition key (5) is supported positively at each of its contact positions (+ACC, +APC) by a ball pushed by a spring and being successively engaged during rotation of the key in cavities provided on a cam integral with the rotating key.

## Patentansprüche

1. Fahrzeugdiebstahlsicherung mit zusammenarbeitendem Zündschloss (5), das relativ zu einem an der Lenksäule (1) des Fahrzeugs befestigten Gehäuse einer Diebstahlsicherung mehrere Winkelpositionen (+ACC, +APC, D) einnehmen kann, in denen verschiedene Schaltkreise oder elektrische Geräte gesteuert werden können, umfassend einen in dem Gehäuse der Diebstahlsicherung untergebrachten Messfühler (14), der es erlaubt, kodierte Informationssignale auszugeben, wobei jedes relativ zu einer bestimmten Winkelposition des Zündschlüssels (5) ist, ein Decodermodul (15), das durch eine bifilare Verbindung (16, 17) mit dem Messfühler (14) verbunden und geeignet ist, jedes kodierte Informationssignal der Winkelposition des Schlüssels (5) zu entschlüsseln, ein Steuermodul (18), das mit dem Decodermodul (15) verbunden ist, um die Steuerung der Schaltkreise oder entsprechenden elektrischen Geräte mittels Leistungsmodulen (19) gemäß der Information der Winkelposition des durch das Decodermodul (15) gelieferten Schlüssels (5) zu gewährleisten, **dadurch gekennzeichnet, dass** das Steuermodul (18) angeordnet ist, um Steuersignale zum Einschalten oder zum Abschalten verschiedener Schaltkreise oder elektrischer Geräte an die verschiedenen Positionen des Zündschlüssels (5) entsprechend den bevorzugt im Steuermodul (18) gespeicherten Hysteresegesetzen und derart zu liefern, dass die Hysterese in der Drehrichtung des Zündschlüssels (5) geringer ist, um die verschiedenen Schaltkreise oder elektrischen Geräte nur in der dem Schlüssel (5) entgegengesetzten Drehrichtung einzuschalten, um diese abzuschalten.

2. Vorrichtung gemäß Anspruch 1, **dadurch gekennzeichnet, dass** die Decodermodule (15), die Steuermodule (18) und die Leistungsmodule (19) in den Rechner (20) des Fahrzeugs integriert sind.

3. Vorrichtung gemäß Anspruch 1 oder 2, **dadurch gekennzeichnet, dass** der Messfühler der Winkelposition (14) des Zündschlüssels (5) einen in Abhängigkeit der Winkelposition des Zündschlüssels (5) derart variablen Widerstand (22) umfasst, dass jeweils den verschiedenen Winkelpositionen des Schlüssels (5) entsprechende verschiedene Widerstandswerte an das Decodermodul (15) abgegeben werden.

4. Vorrichtung gemäß Anspruch 3, **dadurch gekennzeichnet, dass** der variable Widerstand (22) eine Unterlage (23) aus elektrisch isolierendem Material umfasst, eine auf der Unterlage (23) realisierte bogenförmige resistive Spur (24), eine auf der Unterlage (23) realisierte leitende bogenförmige und konzentrisch von der resistiven Spur (24) getrennte Spur (23) und eine bestimmte Anzahl leitender, unterschiedlicher, radialer Lamellen (26), die im Kreisbogen auf der Unterlage (23) zwischen den zwei resistiven Spuren (24) und leitenden Spuren (25) angeordnet und elektrisch an die resistive Spur (24) angeschlossen sind, und einen Rotationsarm (28), der kinematisch mit der Drehung des Zündschlüssels (5) angeschlossen ist und zwei Bürsten (30, 29) trägt, die durch Reibung jeweils auf der leitenden Spur (25) in Kontakt sind, und jede der leitenden Lamellen (26) bei der Drehung des Schlüssels (5), um eine leitende Brücke zwischen einer von der entsprechenden Bürste (29) kontaktierten Lamelle (26) und der leitenden Spur (25) zu realisieren, die elektrisch mit einem leitenden Draht (17) der vorgenannten bifilaren Verbindung angeschlossen ist, deren anderer leitender Draht (16) elektrisch an ein Ende der resistiven Spur (24) angeschlossen ist.

5. Vorrichtung gemäß einem der vorgenannten Ansprüche, **dadurch gekennzeichnet, dass** der Zündschlüssel (5) positiv in jeder seiner Kontaktpositionen (+ACC, +APC) durch eine Kugel gehalten wird, die durch eine Feder geschoben wird und aufeinander folgend bei der Drehung des Schlüssels in die auf einer fest mit dem Schlüssel in Drehung verbundenen Nocke vorgesehenen Aussparungen eingreifen.
